# EUROPÄISCHE PATENTSCHRIFT

(11) **EP 1 123 622 B1**
(45) Veröffentlichungstag und Bekanntmachung des Hinweises auf die Patenterteilung: **24.01.2007**
(21) Anmeldenummer: 99957889.1
(22) Anmeldetag: 12.10.1999
(51) Int. Cl.: H04Q 3/00

(54) **VERFAHREN ZUR STEUERUNG VON NETZELEMENTEN**
METHOD FOR CONTROLLING NETWORK ELEMENTS
PROCEDE DE COMMANDE D'ELEMENTS RESEAU

(30) Priorität: 19.10.1998 DE 19848115
(43) Veröffentlichungstag der Anmeldung: 16.08.2001
(73) Patentinhaber: SIEMENS AKTIENGESELLSCHAFT, 80333 München (DE)
(72) Erfinder: HAMANN, Jan, D-81249 München (DE); WERNER, Thomas, D-81375 München (DE); BHAVSAR, Umesh, Boca Raton, FL 33433 (US); RIEKEN, Ralf, D-81674 München (DE)
(86) Internationale Anmeldenummer: PCT/DE1999/003277
(87) Internationale Veröffentlichungsnummer: WO 2000/024205

(56) Entgegenhaltungen:
- WO-A-96/09707
- US-A- 5 457 797
- GOKHALE A ET AL: "THE PERFORMANCE OF THE CORBA DYNAMIC INVOCATION INTERFACE AND DYNAMIC SKELETON INTERFACE OVER HIGH-SPEED ATM NETWORKS" GLOBAL TELECOMMUNICATIONS CONFERENCE (GLOBECOM),US,NEW YORK, IEEE,1996, Seiten 50-56, XP000742125 ISBN: 0-7803-3337-3
- "CORBA: INTEGRATING DIVERSE APPLICATIONS WITHIN DISTRIBUTED HETEROGENEOUS ENVIRONMENTS" IEEE COMMUNICATIONS MAGAZINE,US,IEEE SERVICE CENTER. PISCATAWAY, N.J, Bd. 35, Nr. 2, 1. Februar 1997 (1997-02-01), Seiten 46-55, XP000683401 ISSN: 0163-6804

## Beschreibung

Die Erfindung betrifft ein verteiltes Betriebssystem zur Steuerung von Netzelementen in einem Daten- oder Telekommunikationsnetz.

Für die Netzbetreiber von Telekommunikationsnetzen wird es immer wichtiger, daß sie den Netz-Benutzern neben einfachen Basisdiensten, wie der Übertragung von Sprache oder Daten, sogenannte Netzdienste oder auch (integrierte) Mehrwertdienste bieten können. Darunter versteht man die Kombination und Erweiterung der Basisdienste, zum Beispiel die eindeutige Nummer in verschiedenen Netzen (Universal Personal Number, Festnetz und Mobilnetz), Weiterleitungs- und Anrufbeantworterfunktionen im Netz und vieles andere mehr.

Eine bereits bekannte technische Lösung ist das sogenannte Intelligente Netz, welches zentral von einem Netzelement, dem sogenannten SCP (Service Control Point), gesteuert wird. Diese ist in der Protokollsuite Q.12xx der ITU hinreichend beschrieben.
Ein wesentlicher Nachteil der Technik der Intelligenten Netze ist insbesondere die große Abhängigkeit von dem zentralen Netzelement. Der sehr konstenintensive Einsatz von einerseits leistungsstarker und ausfallsicherer Hardware und andererseits sogenannter 'Backup' Systeme, also eine Verdopplung der wichtigsten Elemente des Systems (Hardware und Software) ist notwendig, um die im laufenden Betrieb benötigte Ausfallsicherheit zu gewährleisten.

CORBA - Common Object Request Broker Architecture - ist ein offener Standard für systemunabhängige Schnittstellen. In der Druckschrift "CORBA: Integrating Diverse Applications Within Distributed Heterogeneous Environments", Steve Vinoski, IEEE Communications Magazine, Feb. 1997, wird die Möglichkeit des gemeinsamen Verwalten und Steuern von verschiedenen physikalischen Basisnetzen durch Kommunikation zwischen verteilten Netzelementen beschrieben. Ergänzend dazu werden in "The Performance of the CORBA Invocation Interface and Dynamic Skeleton Interface over High-Speed ATM Networks", Gokhale und Schmidt, IEEE 1996, Seiten 50-56, zusätzliche Schnittstellen für CORBA eingeführt.

WO 96/09707 beschreibt ein integriertes Management von mehreren Netzen mit unterschiedlichen Topologien durch ein spezielles Routing-Verfahren mittels miteinander vernetzter Netzelemente.

Die US 5,457,797 zeigt eine Möglichkeit auf, wie ein Anwendungsprogramm verteilt auf verschiedenen Netzelementen ausgeführt werden kann.

Aufgabe der Erfindung ist es, eine Lösung anzugeben, wie die im Netz verteilten Netzelemente in einer anpassungsfähigen Netzarchitektur gesteuert werden können und das Anbieten von Mehrwertdiensten netzübergreifend und nach Anbietern getrennt ermöglicht werden kann. Dabei sollen die oben genannten Nachteile der Technik der Intelligenten Netze umgangen werden.

Diese Aufgabe wird gelöst durch ein verteiltes Betriebssystem gemäß der in Anspruch 1 beschriebenen technischen Lehre.

Unter einem *physikalischen Basisnetz* versteht man ein homogenes Netz wie zum Beispiel das Telefonnetz (POTS, Plain Old Telephone Service) zur analogen Übertragung von Daten wie Sprache, ein ISDN-Netz (Integrated services Digital Network) zur digitalen Übertragung, das Mobiltelefonnetz, oder das Internet, welches wiederum selber aus einzelnen Netzen zusammengesetzt ist.
Ein *Netzbetreiber* ist verantwortlich für ein solches Basisnetz.

In den folgenden Ausführungen werden verschiedene Bezeichnungen für Funktionen und Dienste verwendet:
- ein *Netzbasisdienst* ist ein Basisdienst, wie er von den physikalischen Basisnetzen dem Benutzer zur Verfügung gestellt wird, etwa Sprachübertragung bei POTS oder bei ISDN die 'Bearer Services',
- eine *Netzfunktion* dagegen wird zum Betrieb des Netzes und seiner Dienste benötigt, sie ist jedoch für einen Benutzer von Netzdiensten nicht direkt sichtbar. Hierzu gehören etwa Verkehrsüberwachung oder Routing.
- Ein *Netzdienst* ist zusammengesetzt aus Netzbasisdiensten und möglichen Ergänzungen (zum Beispiel der ISDN Dienst).
- Ein *integrierter Mehrwertdienst* ist ein Netzdienst, der seinerseits wieder aus Netzdiensten auch verschiedener physikalischer Basisnetzdienste zusammengesetzt sein kann.
   Dieser kann von dem Netzbetreiber angeboten werden, oder auch von einem sogenannten *Dienstintegrator*.
- Unter einer *Applikation* versteht man auch die sogenannte Anwendungsschicht, hierbei werden die (zuvor neutralen) Netzdienste und Mehrwertdienste an den jeweiligen Bedarf des Diensteanbieters und des Dienstbenutzers angepaßt, zum Beispiel bezüglich der Vergebührung und Tarifierung von Diensten.
- Die Kommunikation mit den physikalischen Basisnetzen erfolgt über den Aufruf von Netzfunktionen, Netz- und Netzbasisdiensten in dem jeweiligen *systemspezifischen Format.* Damit sind z. B. INAP (Intelligent Network Application Part), SS7 (Signalling System No 7) oder MAP (Mobile Application Part) gemeint.
- Eine *Grundfunktion* ist eine zusätzliche, durch eine neue erweiterte Netzarchitektur eingeführte, Funktion. Sie ermöglicht etwa den Zugang zu einem physikalischen Basisnetz oder die Verteilung der Aufrufe von den im Netz verteilten Netzdiensten und -funktionen.
- Unter *benachbarten Netzelementen* versteht man solche, die sich in einer logischen Ebene der verwendeten Netzarchitektur befinden. Dagegen ist ein *unterliegendes Netzelement* mindestens eine Hierarchieebene unter dem *darüberliegenden Netzelement.*

Das erfindungsgemäße Betriebssystem steuert ein Daten- und Kommunikationsnetz, bestehend aus unterschiedlichen, unterliegenden, physikalischen Basisnetzen. Diese Basisnetze bestehen aus Netzelementen, welche verschiedene Netz(basis)-dienste und Netzfunktionen anbieten, und mit systemspezifischen Aufrufen gesteuert werden können.
Entsprechend dazu existieren übergeordnete Netzelemente, welche mit speziellen Betriebssystemkomponenten ausgestattet sind und von den physikalischen Teilnetzen unabhängige Grundfunktionen ausführen, wie den Zugang zu den physikalischen Basisnetzen, die Verteilung der Aufrufe von Netzbasisdiensten und die Umsetzung der Aufrufe in die entsprechenden systemspezifischen Formate (zur Verfügung stellen der Schnittstellen). Diese übergeordneten Netzelemente können Bestandteil der vorhandenen physikalischen Netze sein oder auch eigenständige Netzelemente.
Die Schnittstellen, welche den Zugang zu den physikalischen Basisdiensten ermöglichen, können dabei auf der systemunabhängigen Seite offengelegt sein, d. h. beispielsweise in Form von Standardisierung eines einheitliches Zugriffsformates.

Dieser Aufbau der Daten- und Kommunikationsnetze verteilt die Steuerung der Netzbasisdienste, Netzdienste und Mehrwertdienste auf die Netzelemente, indem für die Zusammenarbeit notwendige Informationen ausgetauscht werden. Die Netzelemente können in ihrer Struktur gleichartig oder unterschiedlich sein.
Dadurch werden die Probleme der zentralisierten Steuerung, wie sie in einem Intelligenten Netz existiert (Zuverlässigkeit, Verfügbarkeit, "Flaschenhals", Fehlertoleranz) umgangen.
Weiterhin ist eine Integration von verschiedenen Netzbasisdiensten unterschiedlicher physikalischer Basisnetze möglich.

Vorteilhafte Ausgestaltungen und Weiterbildungen sind in den Unteransprüchen angegeben.

Das Einführen und Entfernen von einzelnen Netzelementen oder ganzen physikalischen Basisnetzen soll problemlos möglich sein. Daher werden die Informationen, welche in den Netzelementen (insbesondere in den übergeordneten Netzelementen) gespeichert sind, um eine Koordination der Funktions- und Dienstaufrufe zu ermöglichen, regelmäßig aktualisiert und an die benachbarten Netzelemente verteilt. Dies betrifft nicht nur die Einführung von neuen Diensten und Basisnetzen (auch herstellerunabhängig), sondern auch die Änderung von bereits vorhandenen Diensten und Basisnetzen. Diese Funktionsweise schafft eine Flexibilität, die Voraussetzung ist für die Einführung immer neuer Mehrwertdienste (insbesondere solcher, bestehend aus Kombinationen von Netzbasisdiensten verschiedener physikalischer Basisnetze).

Zur verteilten Ausführung von Funktionen kann das verteilte Betriebssystem die Netzelemente nach dem Client-Server-Prinzip steuern. Jedes Netzelement soll sowohl als Client als auch als Server arbeiten können, was durch einen einheitlichen Aufbau jedes Netzelementes sichergestellt wird.
Dies ermöglicht es, Funktions- und Dienstaufrufe durch das Netz zu transportieren und das jeweils am besten geeignete Netzelement die Aufrufe bearbeiten zu lassen. Dabei ist es auch möglich, daß Netzdienste und -funktionen von mehreren Netzelementen ausgeführt werden könnten.

Ein Applikations-Aufruf kann verteilt ausgeführt werden. Dafür kann es notwendig sein, ihn zuvor in Teilfunktionen bzw. -Dienste zu zerlegen.
Die Ausführung dieser Funktionen und Dienste steuert das Betriebssystem, indem die betroffenen Netzelemente über die definierten, systemunabhängigen, offenen Schnittstellen die Funktions- und Dienstaufrufe entgegen nehmen und in systemspezifische Aufrufe umsetzen. Dadurch werden einzelne Funktionen in solcher Art verfügbar gemacht, daß aus Netzbasisdiensten und -funktionen verschiedener physikalischer Basisnetze integrierte Mehrwertdienste gebildet werden können.

Das Betriebssystem steuert die Ausführung der Dienst- und Funktionsaufrufe aufgrund von in den Netzelementen vorhandenen Informationen darüber, welches Netzelement welche Funktionalitäten besitzt. Die Aufrufe werden hierfür zu den entsprechenden geeigneten Netzelementen geleitet.
Dazu können verschiedene Prinzipien der Wegewahlverfahren einzeln oder gemeinsam angewendet werden, wie z. B.:
- *dynamisches Routing,* d. h. die auf die Netzelemente verteilten Informationen über die Fähigkeiten der Netzelemente werden laufend aktualisiert, indem von durch Änderungen betroffenen Netzelementen Meldungen erzeugt werden, welche dann in dem Netz verteilt und von den anderen Netzelementen ausgewertet werden,
- *verteiltes Routing,* d. h. jedes im Netz befindliche Netzelement kann Wegewahlentscheidungen treffen (keine zentrale Steuerung der Wegewahl),
- *Multi-Pfad* Routing, d. h. eine Verteilung der Funktions- und Dienstaufrufe über mehrere Wege, so daß teilweise auch eine mehrfache Ausführung des Aufrufes in verschiedenen Netzelementen angestoßen werden kann. Dies erhöht den Durchsatz (der schnellste Weg) und die Redundanz, und damit die Fehlertoleranz,
- *hierarchisches Routing,* d. h. ein Applikationsaufruf wird zuerst in Teilfunktions-und Teildienst-Aufrufe aufgespalten und weitergeleitet (unter Umständen sogar über mehrere Abstraktionsebenen) und erst danach in Netzbasisfunktionen und -dienste, die ausgeführt werden können,
- *Link-State-Routing,* d. h. es wird nur diejenige Information zur Wegewahl (Netzabbild) gesendet, die Änderungen zu Netzelement-Fähigkeiten beschreibt. Dies senkt den Datenfluß, der zu Administrationszwecken notwendig ist.
- *Funktionsklassen Routing,* d. h. Aufrufe werden bezüglich ihrer Abarbeitung priorisiert, z. B. nach erlaubter zeitlicher Verzögerung, gefordertem Durchsatz und geforderter Verfügbarkeit.

Das Betriebssystem kann nach einer erfindungsgemäßen Ausgestaltung in 3 Schichten aufgebaut sein:
- Anwendungsschicht (Application Layer)
- Dienstentwicklungs- und -bereitstellungsschicht (Service Development Layer)
- Netzelement-Funktionsschicht (Network Element Functionality Layer).
Die verschiedenen Schichten realisieren dabei unterschiedliche Aufgaben und werden in den Netzelementen unterschiedlich aktiv, je nachdem ob eine Client- oder eine Server-Rolle übernommen wird, obwohl sie gleichartig in allen Netzelementen ausgeprägt sind.

Die Anwendungsschicht stellt die Anwendungen, welche auch Applikationen genannt werden, zur Verfügung. Diese Schicht ist nur in dem Fall aktiv, wenn das Netzelement als Client agiert.

Die mittlere Schicht (Dienstentwicklungs- und -bereitstellungsschicht, auch Service Development Layer) hat folgende Aufgaben:
- Umsetzung von Anwendungsaufrufen (Applikationsaufrufe) über entsprechende Schnittstellen in Funktions- und Dienstaufrufe, etwa mit Hilfe von APIs (Application Programming Interfaces),
- Weiterleitung der Funktions- und Dienstaufrufe an geeignete Netzelemente zur Weiterbearbeitung, entsprechend der in den Netzelementen abgespeicherten Informationen das Netz betreffend, in geeigneter Weise, d. h. mit den benötigten Parametern im systemspezifischen Format der physikalischen Basisnetze,
- Ressourcen- und Performance Management,
- Vergebührungn und Tarifierung (Verarbeitung spezifischer Daten über Verbindungen wie z. B. AMA-Daten),
- Sicherheit,
- Fehlermanagement (Erfassen, Bearbeiten, Auswerten von Fehlern),
- Verwaltung der benötigten Informationen (z. B. in Datenbanken),
- Transaktionsüberwachung.

Das Betriebssystem kann jedes Netzelement sowohl als Client als auch als Server steuern, je nachdem, ob das Netzelement anforderndes oder ausführendes Netzelement ist. Je nach der gerade eingenommenen Funktion ist auch die Dienstentwicklungs- und -bereitstellungsschicht unterschiedlich ausgeprägt.

Arbeitet das Netzelement gerade im anfordernden Modus (als Client), so sind folgende Funktionalitäten aktiv:
- Betreiben einer Schnittstelle (Schnittstellen-Manager), wobei diese Schnittstelle systemunabhängige Dienst- und Funktionsaufrufe annimmt und sie dann in die entsprechenden systemabhängigen Aufrufe (basisnetzabhängig) übersetzt, um sie an die geeigneten systemspezifischen Transportmechanismen weiterzugeben. Weiterhin werden hier die für die Wegewahl der Funktions- und Dienstaufrufe notwendigen Informationen gepflegt.
- Anbieten von häufig benötigten Grunddiensten (zum Beispiel Adresskonvertierung, Datenreplikation, Verwaltung von Datenbanken),
- Transportmechanismen zur Bereitstellung der Verbindung mit den Netzelementen und dem dafür notwendigen systemspezifischen Aufruf-Format.

Es gibt verschiedene Transpormechanismen:
- serverspezifischer Transportmechanismus, abhängig von den Netzelementen des unterliegenden Basisnetzes,
- serverunabhängiger (default) Transportmechanismus zur Kommunikation benachbarter Netzelemente, z. B. innerhalb der Anwendungsschicht.

Hat der Schnittstellen-Manager anhand der ihm zur Verfügung stehenden Informationen identifiziert, daß das Netzelement, in dem er residiert, direkt mit dem für die Ausführung des Aufrufes zuständigen Basisnetz verbunden ist, dann wird dieser Funktionsaufruf in das systemspezifische Format des entsprechenden Basisnetzes umgesetzt und zur dem verbundenen Netzelement des Basisnetzes zur Ausführung übergeben.
Die dynamische Aktualisierung der Informationen über Fähigkeiten eines Netzes wird dadurch gesichert, daß bei Verfügbarkeit neuer Netzbasisfunktionen und -dienste jedes im Netz befindliche Netzelement (Server) Informationen für die Aktualisierung der serverspezifischen Transportmechanismen aktualisiert und an andere Netzelemente (Clients) verteilt, aufgrund derer in diesen Netzelementen die Schnittstellen und weitere Informationen etwa Routing Tabellen) angepaßt werden.

Ist das Netzelement, in dem der Schnittstellen-Manager residiert, nicht direkt mit dem für die Ausführung des Aufrufes zuständigen Netzelement verbunden, so wird dieser Aufruf an einen Standard-Transportmechanismus übergeben. Dieser stellt dann sicher, daß der Funktionsaufruf in geeigneter Weise an Netzelemente weitergeleitet wird, die als Server diese Aufrufe empfangen und ausführen oder als Clients deren Bearbeitung sicherstellen.

Arbeitet das Netzelement gerade im ausführenden Modus (als Server), so sind in der Dienstentwicklungs- und -bereitstellungsschicht folgende Funktionalitäten aktiv:
- Firewall
- Zugriffskontrolle
- Filter
zur Überwachung und Steuerung empfangener Aufrufe und Meldungen.

Die Netzwerkfunktionalität beinhaltet dabei zur Ausführung der Funktions- und Dienstaufrufe folgende Aufgaben:
- Verbindungssteuerung (Connection Control)
- Rufsteuerung (Call Control)
- Anwenderprogramme (User Programs)
- Leistungsmerkmalsteuerung (Feature Control)
- Vermittlung
- Wegewahl
- Transport.

Das Netzbetriebssystem kann das gesamte Telekommunikationsnetz in mehrere Schichten strukturieren, die funktionalen Netzdomänen. Durch diese Netzdomänen wird die Art und Weise der Anwendungs-Aufrufe in Teilfunktions- und Teildienst-Aufrufe usw. festgelegt. Dieses Prinzip ermöglicht das bereits erwähnte hierarchische Routing.
Da die Informationen über die Fähigkeiten der Netzelemente in hierarchischen Schichten ausgetauscht werden, benötigt jedes Netzelement nur das Wissen über die funktionalen Fähigkeiten einer begrenzten Anzahl von Netzelementen. In Abhängigkeit von den Anforderungen bezüglich Bearbeitungsdauer und -geschwindigkeit von Aufrufen können im (als Client fungierenden) Netzelement verschiedene (als Server in Frage kommende) Netzelemente ausgewählt und die damit verbundenen serverspezifischen Transportmechanismen angesprochen werden, um Bearbeitungszeiten und Netzdurchlaufzeiten zu optimieren.
Die funktionalen Domänen können sich zum Beispiel an den vorhandenen Basisnetzen orientieren, oder auch an unterschiedlichen Organisationsstrukturen oder auch Netzbetreibern.

Die Netzdomänen wiederum können aus Kern-Netzelementen und Standard-Netzelementen bestehen. Alle Netzelemente müssen Informationen (für die Wegewahl) darüber enthalten, welche Funktions- und Dienstklassen in welchen Domänen ausgeführt werden können.

Die Kern-Netzelemente sind im Wesentlichen für die Ausführung der Anwendungsanforderungen und Dienst- und Funktionsaufrufe zuständig.
Dabei sollen Umstände vermieden werden, unter denen Aufrufe nicht mehr mit der erforderlichen Dienstgüte (Bandbreite, Zeit, usw.) ausgeführt werden können. Hierzu können Anwendungsanforderungen und Dienst- und Funktionsaufrufe priorisiert und entsprechend der vorhandenen Ressourcen den verschiedenen ausführenden Netzelementen zugewiesen werden. Für die optimale Funktion dieser Netzelemente ist eine dynamische Aktualisierung der Wegewahl-Tabellen und damit eine ständige Aktualisierung von Art, Umfang und Ort der im Netz zur Verfügung stehenden Netzfunktionen, Netzdienste und Netzressourcen notwendig.

Standard-Netzelemente nehmen dagegen insbesondere Funktionen des Erkennens und Klassifizierens sowie der Wegewahl bei denjenigen Dienst- und Funktionsaufrufen wahr, die durch ein Kern-Netzelement nicht ausgeführt werden konnten.
Dafür sind z. B. folgende Mechanismen zur Behandlung von Aufrufen notwendig:
- Weiterleitung des Aufrufes an eine Netzdomäne mit entsprechender Dienst- und Funktionsklasse
- Weiterleitung des Aufrufes an ein Netzelement mit entsprechender Dienst- und Funktionsklasse
- Weiterleitung des Aufrufes an ein Netzelement oder eine Netzdomäne, von der bekannt ist, daß dort ähnliche Dienste und Funktionen oder Dienst- und Funktionsklassen ausgeführt werden,
- Zurückweisen von Aufrufen.

Standard-Netzelemente nehmen auch Funktionen der Zugriffsteuerung für Netzdomänen wahr, z. B. in Fällen, in denen besondere Beschränkungen bezüglich der Ausführung von Anwendungen, Funktionen und Diensten vorliegen. Die Aufrufe werden zugelassen, abgewiesen oder auch mit einer Priorität versehen.

Im folgenden wird die Erfindung anhand von Ausführungsbeispielen erläutert. Dabei zeigen
- Figur 1: eine beispielhafte verteilte Netzarchitektur mit unterschiedlichen unterliegenden physikalischen Kommunikations- und Datennetzen,
- Figur 2: ebenfalls eine verteilte Netzarchitektur, die in 3 logische Schichtungen aufgeteilt wurde,
- Figur 3: ein Netzelement, welches mittels eines serverspezifischen Transportmechanismus mit einem physikalischen Basisnetz kommuniziert,
- Figur 4: einen von einem API-Manager eines Clients kommenden Applikationsaufruf, der zerlegt und an die ausführenden Netzknoten (Server) weitergeleitet wird,
- Figur 5: den Aufbau eines Netzelementes aus Client-Sicht,
- Figur 6: den Aufbau eines Netzelementes aus Server-Sicht,
- Figur 7: eine beispielhafte verteilte Netzarchitektur mit 2 unterliegenden physikalischen Netzen sowie einem Dienstanbieter.

Einschränkungen in den Figuren/Ausführungsbeispielen sind für die Erfindung nicht zwingend.

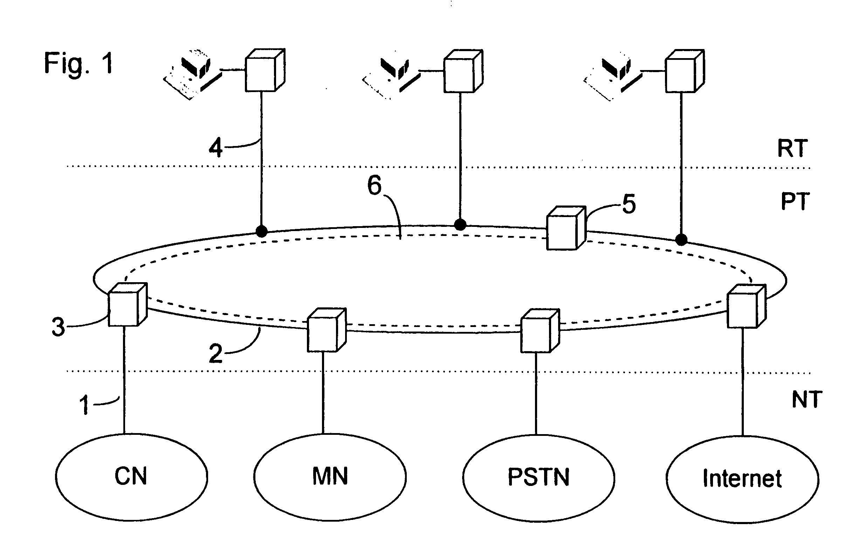

Die *Figur 1* zeigt schematisch eine verteilte Netzarchitektur, welche sich in 3 Schichten manifestiert. In der untersten Schicht (NT) auf diesem Bild sieht man die unterschiedlichsten physikalischen Netze, wie sie derzeit existieren. Es handelt sich um Datennetze (CN, Corporate Networks, Internet) und Kommunikationsnetze (MN, PSTN), viele andere sind denkbar. Insbesondere gibt es zwischen den einzelnen Netzen bislang keine oder nur sehr unzureichende Verbindungen.
Die mittlere Schicht (PT) zeigt nun die verteilte Netzarchitektur, die 'über' den physikalischen Netzen (NT) etabliert wird und der Diensteintegration dient. Die einzelnen physikalischen Netze sind dabei jeweils über mindestens eine Verbindung (1) und eine geeignete Schnittstelle in einem Netzelement (3) mit einem Datennetz (2) verbunden. Die Darstellung des Datennetzes als Ring ist hierbei nur eine Möglichkeit, der Aufbau des Datennetzes ist für die Erfindung nicht von Bedeutung.
In diesem Datennetz (PT) befinden sich die im wesentlichen gleichartigen, verteilten Netzelemente (3, 5), welche bezüglich der Anforderungen an ihre Leistungsfähigkeit anpassbar sind. Einzelne Netzelemente (5) können auch ausschließlich zur Steuerung des Netzes eingesetzt werden, indem sie hierfür benötigte Dienste und Funktionen bereitstellen. Andere Netzelemente (3) nehmen die Kommunikation und Zusammenarbeit mit den unterliegenden physikalischen Netzen (NT) wahr und stellen die hierfür benötigten Schnittstellen bereit.
Die Zusammenarbeit und der Austausch von Informationen (etwa zur Registrierung von Netzelementen, Diensten und Funktionen) wird durch das verteilte Netz-Betriebssystem (6) gesteuert. Dieses residiert in den einzelnen Netzelementen (3, 5).
In der obersten 'Schicht' (RT) befinden sich die Netze oder Netzelemente der Dienstanbieter und -integratoren, welche den Kunden betreuen. Diese sind ebenfalls über geeignete Schnittstellen (4) an das Datennetz angeschlossen. Hierüber werden die dieserseits erforderlichen Informationen (für Authentisierung der Benutzer, Administration der Dienste, Abrechnung der Inanspruchnahme von Diensten, etc.) ausgetauscht. Dies kann über systemunabhängige Schnittstellen erfolgen, was eine deutliche Vereinfachung der Kommunikation auch verschiedener Dienstanbieter und Dienstintegratoren untereinander gewährleistet.

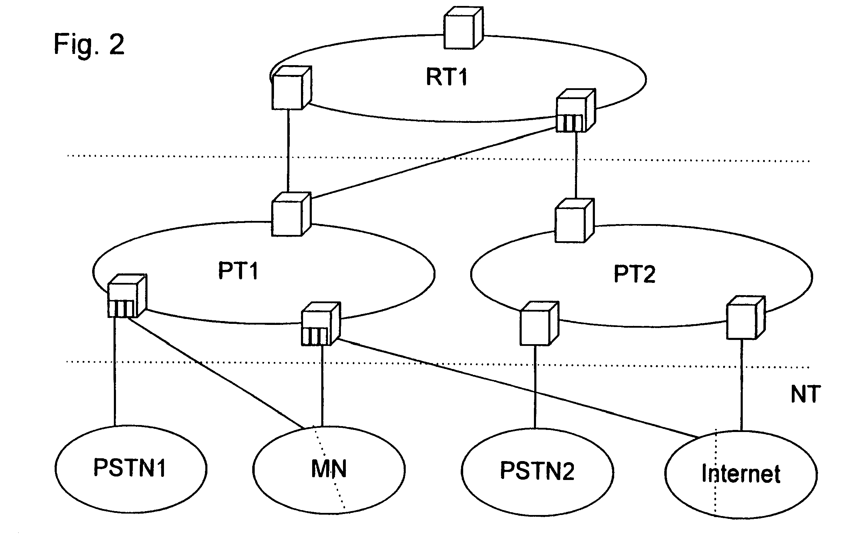

*Figur 2* zeigt einen anderen möglichen Aufbau einer verteilten Netzarchitektur. Insbesondere sind auf jeder Ebene mehrere, parallel angeordnete Netze möglich (PT1, PT2) und (PSTN1, MN, PSTN2, Internet).
In den Netzelementen sind bei Zugriff auf verschiedene Netzelemente aus unterliegenden Schichten auch die entsprechenden systemspezifischen Schnittstellen vorhanden.
Es kann auf mehrere gleichartige Basisnetze (NT) nebengeordnet zugegriffen werden (PSTN1 und PSTN2), etwa Festnetze verschiedener Länder oder Betreiber.
Greifen mehrere "übergeordnete" Netzelemente von unterschiedlichen Dienstanbietern (PT1, PT2) auf ein Basisnetz (Internet) zu, so werden die Basisnetzresourcen dynamisch aufgeteilt (gestrichelte Linie).

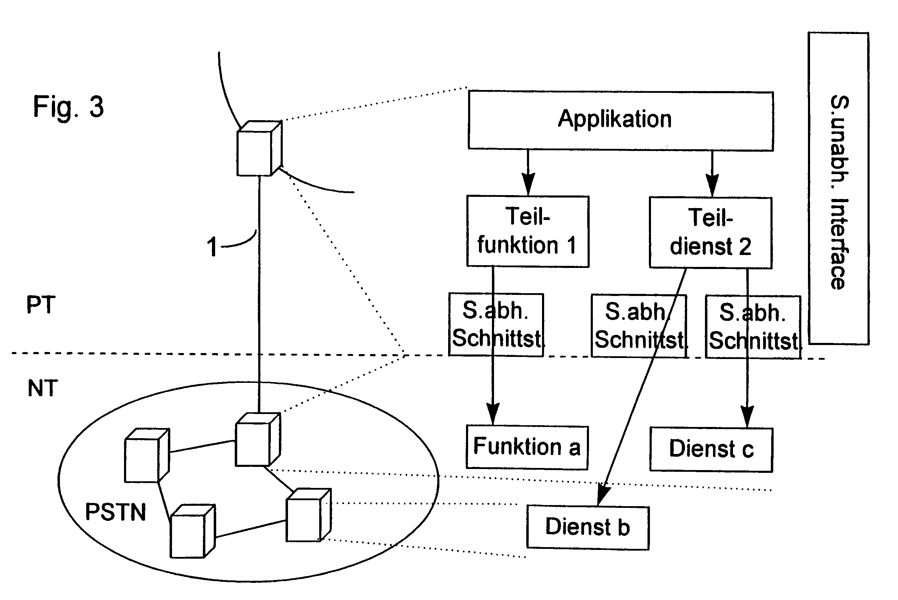

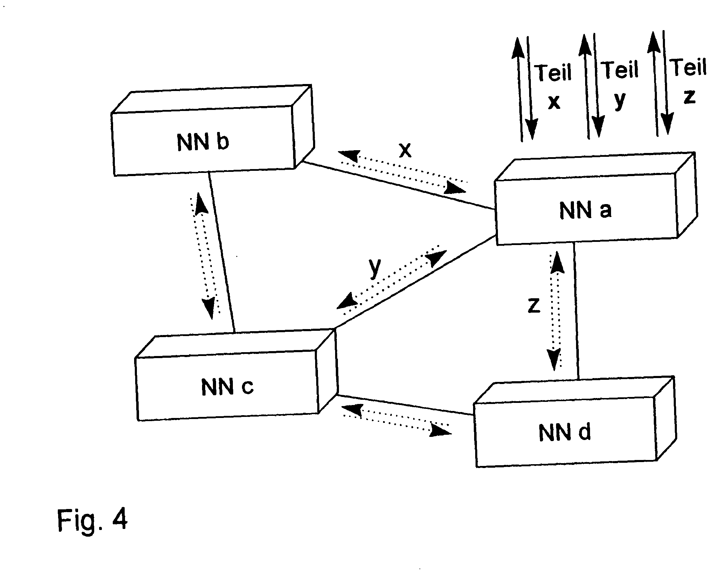

*Figur 3* beschreibt einen Aufruf einer Anwendung(Application), welcher von dem Benutzer eines Mehrwertdienstes geschieht. Dieser Anwendungsaufruf wird dann zuerst in dem Netzelement in mehrere Teilfunktionen und -dienste (Teilfunktion 1, Teildienst 2) zerlegt. Das Netzelement stellt danach fest, daß es direkt mit dem unterliegenden Basisnetz verbunden ist, welches die benötigten Funktionen und Dienste (Funktion a, Dienst b, c) zur Verfügung stellt. Mit einem serverspezifischen Transportmechanismus übermittelt das Netzelement 1 über die systemabhängige Schnittstelle (1) die Funktionsaufrufe an das unterliegende Basisnetz (PSTN). Das direkt verbundene Netzelement kann dann mehrere dieser Aufrufe (Funktion a, Dienst c) ausführen und leitet die anderen Aufrufe (Dienst b) an ein benachbartes Netzelement weiter, welches die benötigte Funktionalität bietet (siehe dazu auch Figur 4).

*Figur 4* zeigt einen Ausschnitt der neuen Architektur, welche den physikalischen Netzen übergeordnet ist.
Dargestellt sind 4 Netzelemente (NN1 - NN4, Network Node, Netzelement), die über ein Datennetz verbunden sind und Funktions- und Dienstaufrufe und Informationen austauschen, gesteuert durch ein verteiltes Netz-Betriebssystem.
Ein in einem der Netzelemente (Client) residierender API-Manager routet zu Applikationen zugehörende Aufrufe von Netzfunktionen und -diensten zu den ausführenden Netzelementen (NN b, c, d). Dazu stellt der API-Manager die erforderlichen Routing-Informationen netzweit zur Verfügung. Diese Informationen werden zwischen den Netzelementen ausgetauscht und konsistent gehalten.
Netzweit verteilte Ressourcen können so genutzt werden. Damit ist zum Beispiel eine Last-Teilung möglich, indem gleiche Funktionen in mehreren Netzelementen angesprochen werden können.
Das in der Figur dargestellte Beispiel enthält einen Aufruf, der mehrere Teilaufrufe (x, y, z) enthält. Das erste angesprochene Netzelement kann jedoch den Teilaufruf nicht bearbeiten, da es die erforderlichen Funktionen nicht bereitstellt oder seine Kapazität bereits vollständig ausgelastet ist.
Er leitet die Funktions- und Dienstaufrufe an benachbartes Netzelement weiter, und so kann eine Anwendung (xyz) auf in diesem Beispiel drei verschiedenen Netzelementen parallel weiterbearbeitet werden. Ein Netzelement (NN2) übernimmt die Bearbeitung von Funktionsteil (x), Netzelement (NN3) die Bearbeitung von (y) und Netzelement (NN4) die Bearbeitung von (z).
Das Routing der einzelnen Teildienste und -funktionen zu den bearbeitenden Netzelementen kann durch verschiedene Kriterien gesteuert sein. Beispielhaft werden hier das Vorhandensein der benötigten Funktionen und Dienste sowie die Auslastung der einzelnen Netzelemente angeführt. Ein weiteres Kriterium kann die Länge des Weges zu dem bearbeitenden Knoten darstellen, andere Kriterien sind vorstellbar.

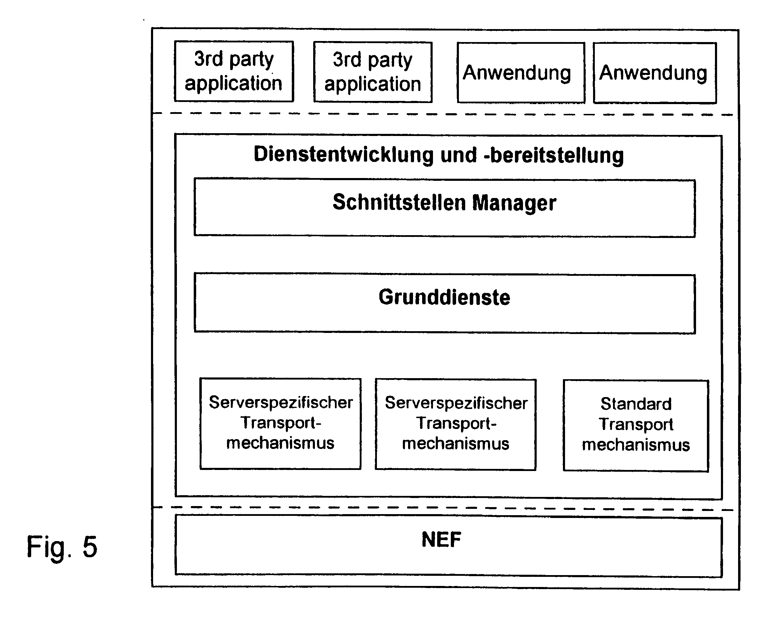

In *Figur 5* ist die funktionale Struktur eines Netzelementes als Client ersichtlich.
Die oberste Anwendungsschicht (Application Layer) ist nur im Client ausgebildet. Anwendungsaufrufe (3^{rd} party application, Anwendung) werden hier in Funktions- und Dienstaufrufe zerlegt und weiter bearbeitet.
Die Dienstentwicklungs- und Dienstbereitstellungsschicht besteht aus einem Schnittstellen Manager (Schnittstellen Manager), z. B. einem API (Application Programming Interface) Manager, welcher folgende Aufgaben übernimmt:
- eine Menge systemunabhängiger offener Schnittstellen zur Verfügung stellen,
- Aufrufe über diese Schnittstellen entgegen nehmen und in entsprechende Funktions- und Dienstaufrufe umsetzen,
- Wegewahl der Funktions- und Dienstaufrufe
- Aktualisierung von Wegewahlinformationen, so daß neue Netzelemente und neue Funktionen und Dienste möglichst schnell berücksichtigt werden,
- interne Verbindung zu den Transportmechanismen herstellen.

Häufig benötigte Dienste und Funktionen werden ebenfalls bearbeitet (Grunddienste). Dazu gehören etwa Adresskonvertierung, Datenverwaltung, Überwachungen.

Bei einem serverspezifischen Transportmechanismus wird der Funktions- oder Dienstaufruf direkt an ein zuständiges Netzelement in einem Basisnetz zur Bearbeitung übergeben. Das dabei verwendete Aufruf-Format ist abhängig von dem unterliegenden Basisnetz, z. B. MAP.
Anderenfalls (Standard Transportmechanismus) wird der Aufruf zu einem benachbarten Netzelement weitergeleitet, welches ihn wiederum bei bedarf zerlegt, einem Basisnetz zur Ausführung übergibt oder an ein benachbartes Netzelement weiterleitet.

Die Netzelement-Funktionsschicht (NEF) ist die physikalische Schnittstelle für den Transport von Aufrufen und Informationen an benachbarte Netzelemente.

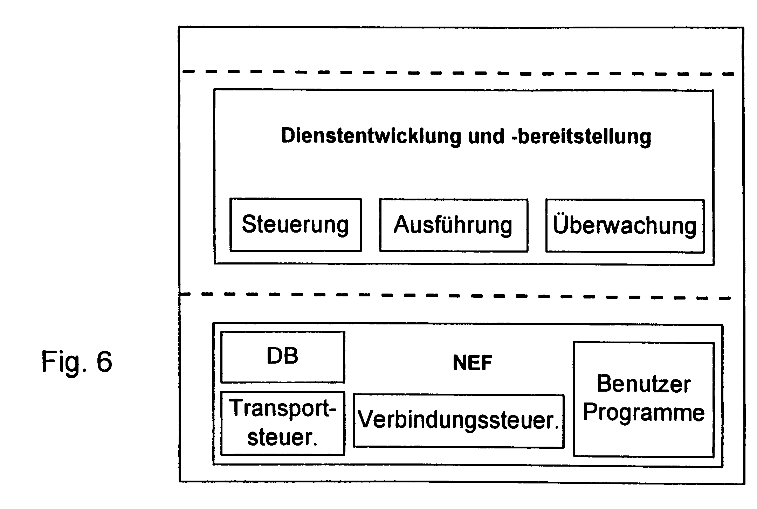

*Figur* 6 zeigt die funktionale Struktur eines Netzelementes als Server.
Die Anwendungsschicht ist hier nicht ausgebildet.
Die Diensteentwicklung und -bereitstellung hat für die Funktionsweise des Netzelements folgende Aufgaben:
- Firewall
- Zugriffskontrolle
- Filter
- Überwachung und Steuerung von Aufrufen.

Die dritte Schicht (NEF, Netzelement Funktionsschicht)ist für die Ausführung der Funktions- und Dienstaufrufe zuständig, insbesondere:
- Verbindungssteuerung
- Datenpflege
- Leistungsmerkmalsteuerung
- Transportsteuerung.

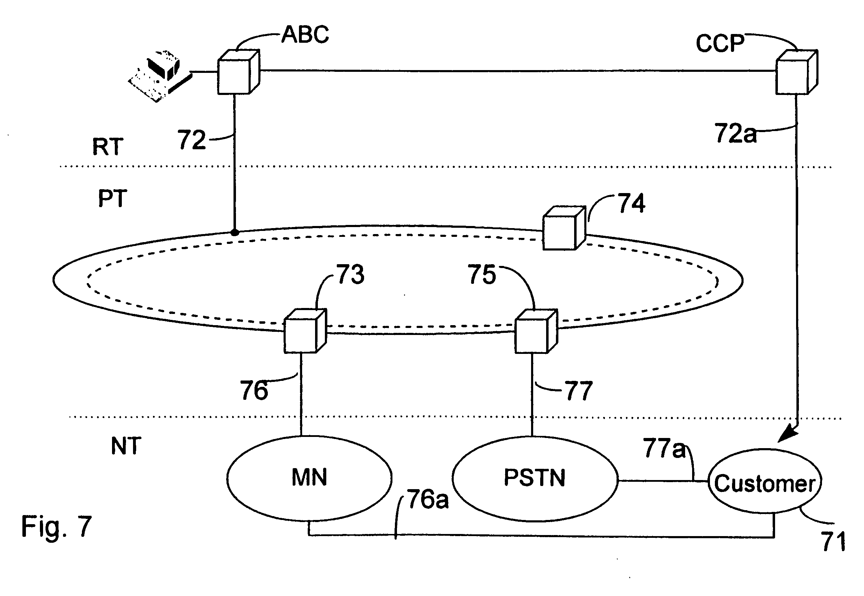

Um die in Figur 1 erläuterte Netzarchitektur noch zu spezifizieren, wird in Figur 7 eine genauer definierte Konfiguration beispielhaft zugrunde gelegt.
Ein Benutzer (71) bezieht einen Mehrwertdienst, welcher aus einem Festnetz- und einem Mobilfunkdienst besteht. Die Dienste werden von zwei unterschiedlichen Netzbetreibern (PSTN, 77a) und (MN, 76a) zur Verfügung gestellt. Der Dienstanbieter speichert und verwaltet in seinem Kundenbetreuungszentrum (ABC, Administration, Billing, Customer-Care Center) das Kundenprofil und führt Gebührenabrechnungen der verkauften Mehrwertdienste durch (72a).
Von dem Dienstanbieter werden über eine Schnittstelle (72) (zum Beispiel durch ein API, Application Programming Interface, realisiert) die relevanten Informationen, wie Kunden-Identifikation, Festnetzrufnummer, Mobilfunkrufnummer, Diensteprofil, für den Bezug des jeweiligen Dienstes von dem Dienstanbieter an den Dienstintegrator weitergeleitet.
Anhand der vom Dienstanbieter angeforderten Diensteparameter werden hierfür vom Dienstintegrator über ein Netzelement (74) die entsprechenden, mit den physikalischen Netzen der Netzbetreiber verbundenen Netzelemente (73, 75) angesteuert, die die hierfür geeignete Schnittstellen (76, 77) bedienen. Diese Schnittstellen sind auf die systemspezifischen Anforderungen des jeweiligen physikalischen Netzes ausgerichtet.
Falls der Benutzer (71) bei den Netzbetreibern noch nicht freigeschaltet war, so geschieht dieses durch Ausführung der Anforderung des Dienstintegrators durch die Netzbetreiber. Die erforderlichen Basisdienste und Leistungsmerkmale werden eingestellt. Die erfolgreiche Einrichtung des Benutzers als Dienst-Teilnehmer wird vom Netzbetreiber an den Dienstintegrator und von diesem an den Dienstanbieter zurück gemeldet (nach Transaktionsprinzip). Ein geeignetes Netzelement (73 oder 75) des Dienstintegrators empfängt diese Rückmeldung, wertet sie aus und ermittelt anhand des vom Dienstanbieter angeforderten Mehrwertdienstes weitere benötigte Dienste und Funktionen und damit Netzelemente (73 oder 75). Dann leitet sie die erforderlichen Informationen über das verbindende Netz (2) an die beteiligten Netzelemente (73, 75) weiter. Diese wiederum leiten nach Bearbeitung der eingegangenen Information die noch bestehenden Anforderungen an die entsprechenden Netzelemente der Netzbetreiber weiter, die sich in (MN) oder (PSTN) befinden.
Sind alle für einen Mehrwertdienst des Dienstanbieters erforderlichen Leistungen der Netzbetreiber freigeschaltet und über die Schnittstelle (76), (77) bestätigt, bestätigt der Dienstintegrator die komplette Freigabe des Mehrwertdienstes für eine Kunden-ID über die Schnittstelle (72) an den Dienstanbieter, der den Kunden von dieser Freigabe, z. B. über den Kundenbetreuer (CCP, Customer Contact Point) über die Schnittstelle (72a) benachrichtigt. Damit kann der Mehrwertdienst vom Kunden genutzt werden.

Nutzungsabhängige Informationen, die aufgrund der Benutzung der Basisdienste in den Netzelementen der Netzbetreiber ermittelt werden, werden zunächst über die Schnittstelle (76, 77) an die Dienstintegratoren weitergeleitet. In den Netzelementen (73), (75), (74) werden diese Informationen entsprechend der, dem Dienstanbieter zur Verfügung gestellten integrierten Mehrwertdienste gesammelt, mit einem Kennzeichen (User-ID, Service-ID) versehen und an das Kundenbetreuungszentrum (ABC) über eine Schnittstelle (72) weitergeleitet. Damit ist nun der Dienstanbieter in der Lage, die empfangenen Informationen dem jeweiligen Kundenprofil zuzuordnen, auszuwerten und abzurechnen (8).

### Abkürzungsverzeichnis

- ABC: Administration, Billing, Customer-Care Center
- AMA: Automatic Message Accounting
- API: Application Programming Interface
- CN: Corporate Networks
- INAP: Intelligent Network Application Part
- ISDN: Integrated services Digital Network
- ITU: International Telecommunication Union
- MAP: mobile application part
- NEF: Netzelement Funktionsschicht
- POTS: Plain old Telephone Service
- SCP: Service Control Point
- SS7: Signalling System No 7

### Literaturverzeichnis

Distributed Operating Systems
   Tanenbaum, A. S.,
   Prentice Hall International, 1995
Q.1200
   ITU-T General Recommendations On Telephone Switching And Signalling - Intelligent Network (3/93)

## Patentansprüche

1. Verfahren zur Steuerung einer geschichteten Netzarchitektur (RT, PT, NT), bestehend aus Netzelementen (3, 5) in einem Netz aus physikalischen Telekommunikations-Basisnetzen (CN, MN, PSTN, Internet), durch ein Betriebssystem, das in drei funktionale Schichten untergliedert ist:
- eine Anwendungsschicht,
- eine Dienstentwicklungs- und -bereitstellungsschicht,
- eine Netzelement-Funktionsschicht (NEF),
wobei das Verfahren über diese Netzelemente verteilte Netzfunktionen, Netz- und Netzbasisdienste aus den darunter liegenden physikalischen Basisnetzen integriert und über systemunabhängige Schnittstellen (1) zur Verfügung stellt,
indem die in gleichen oder verschiedenen Netzelementen residierenden Betriebssystemkomponenten miteinander nach dem Client-Server Prinzip arbeiten, und
die Betriebssystemkomponenten ein Netzelement befähigen, sowohl als Client als auch als Server zu arbeiten, abhängig davon, ob ein Netzelement einen Netzdienst oder eine Netzfunktion anfordert oder ausführt

2. Verfahren nach Patentanspruch 1,
**dadurch gekennzeichnet, dass**
eine Erweiterung des Netzes aus physikalischen Daten- und/oder Kommunikationsnetzen durch Einfügen weiterer Netzelemente oder weiterer physikalischer Basisnetze dynamisch möglich ist.

3. Verfahren nach einem der vorherigen Patentansprüche,
**dadurch gekennzeichnet, dass**
Anwendungen (Applikationen) zerlegt werden können in Netzfunktionsaufrufe (Teilfunktion 1) oder Netzdienstaufrufe (Teildienst 2),
und diese Netzfunktions oder -dienstaufrufe von
- einem Netzelement,
- oder von mehreren Netzelementen, die bezüglich ihrer Grundfunktion verschieden sein können, bearbeitet werden.

4. Verfahren nach Patentanspruch 3,
**dadurch gekennzeichnet, dass**
- die Netzfunktions- (Teilfunktion1, Teil x) und Netzdienstaufrufe (Teildienst2, Teil y) zu geeigneten Netzelementen (3, 5, NNa)) in dem Netz geleitet werden, und
- die Netzelemente die Aufrufe in, dem jeweiligen physikalischen Basisnetzen entsprechenden Aufrufen von Netzdiensten (Dienst b, y), Netzbasisdiensten (Dienst c, z) und -funktionen (Funktion a, x) übersetzen, und
- zu Netzelementen (NNb, NNc, NNd), welche die erforderlichen Netz(basis)dienste und -funktionen besitzen, gesendet werden und
- von diesen bearbeitet werden.

5. Verfahren nach einem der vorherigen Patentansprüche,
**dadurch gekennzeichnet, dass**
die Dienstentwicklungs- und -bereitstellungsschicht mindestens eine der folgenden Funktionen erfüllt:
- Umsetzen von Anwendungen über entsprechende Schnittstellen in Netzfunktions- und Netzdienstaufrufe (Schnittstellen Manager)
- Weiterleiten der Netzfunktions- und -dienstaufrufe in geeigneter Weise (Transportmechanismus),
- Verwalten der Resourcen,
- Vergebühren der Dienste,
- Verarbeitung der erhobenen Vergebührungsdaten zur Tarifierung
- Sicherheitsmanagement,
- Bearbeiten von Fehlermeldungen,
- Überwachen von Transaktionen (Überwachung),
- Verwalten von Informationen.

6. Verfahren nach einem der vorherigen Patentansprüche,
**dadurch gekennzeichnet, dass**
in einem als Server arbeitenden Netzelement die Dienstentwicklungs- und -bereitstellungsschicht Funktionen für folgende Aufgaben zur Verfügung stellt:
- Steuerung (Steuerung)
- Ausführung (Ausführung) und
- Überwachung (Überwachung)
empfangener Funktions- und Dienstaufrufe.

7. Verfahren nach einem der vorherigen Patentansprüche,
**dadurch gekennzeichnet, dass**
in einem als Client arbeitenden Netzelement die Dienstentwicklungs- und -bereitstellungsschicht folgende Aufgaben durchführt:
- Betreiben einer Schnittstelle (Schnittstellen-Manager),
- Anbieten häufig benötigter Grunddienste (Grunddienste),
- Anbieten mindestens eines serverspezifischen Transportmechanismus,
- Anbieten eines Standard-Transportmechanismus.

8. Verfahren nach Patentanspruch 7,
**dadurch gekennzeichnet, dass**
das Betreiben der Schnittstelle folgende Funktionen umfassen kann:
- Bereitstellung von systemunabhängigen Schnittstellen der Dienstentwicklungs- und -bereitstellungsschicht zur Anwendungsschicht,
- Entgegennahme von Applikationsaufrufen und Umsetzung in systemspezifische Funktions- und Dienstaufrufe,
- Verteilen der systemspezifischen Funktions- und Dienstaufrufe entsprechend der in den Netzelementen gespeicherten Information über die Verteilung der Funktionalitäten an die bearbeitenden Netzelemente,
- dynamische Aktualisierung der Information über die Verteilung der Funktionen und Dienste auf die einzelnen Netzelemente und die geeigneten Wegewahlinformationen,
- Herstellung interner Verbindungen zu den systemspezifischen Transportmechanismen.

9. Verfahren nach Patentanspruch 7 oder 8,
**dadurch gekennzeichnet, dass**
ein serverspezifischer Transportmechanismus die ihm übergebenen Funktions- und Dienstaufrufe in ein systemspezifisches Format entsprechend der zugeordneten unterliegenden Netzelemente (Server) umsetzt und weiterleitet.

10. Verfahren nach einem der Patentansprüche 7 bis 9,
**dadurch gekennzeichnet, dass**
ein Standard-Transportmechanismus die ihm übergebenen Funktions- und Dienstaufrufe in ein spezifisches Format entsprechend den benachbarten Netzelementen umsetzt und an diese weiterleitet.

11. Verfahren nach einem der Patentansprüche 7 bis 10,
**dadurch gekennzeichnet, dass**
eine dynamische Aktualisierung der in den Netzelementen (Clients) enthaltenen Informationen über die, im Netz verfügbaren, Dienste oder Funktionen gewährleistet ist, durch einen Aktualisierungsmechanismus, bei welchem
- nach Einführung einer neuen Funktion oder eines neuen Dienstes
- die Netzelemente (Server) die ihnen zugehörigen Informationen der Transportmechanismen aktualisieren und an die, die Transportmechanismen benutzenden, benachbarten und unterliegenden Netzelemente verteilen, und
- in den Netzelementen (Clients) weitere Informationen aktualisiert werden können.

12. Verfahren nach einem der vorherigen Patentansprüche,
**dadurch gekennzeichnet, dass**
die Übertragung und Ausführung von empfangenen Funktions- und Dienstaufrufen durch geeignete Netzbasisfunktionen und Basisdienste von der Netzelement-Funktionsschicht (NEF) sichergestellt wird.

13. Verfahren nach einem der vorherigen Patentansprüche,
**dadurch gekennzeichnet, dass**
das Netz in funktionale Netzdomänen aufgeteilt ist, bestehend aus Kern-Netzelementen und Standard-Netzelementen.

14. Verfahren nach Patentanspruch 13,
**dadurch gekennzeichnet, dass**
Applikationsanforderungen und Funktions- und Dienstaufrufe durch die Kern-Netzelemente ausgeführt werden, wobei sichergestellt ist, dass dies mit der angeforderten oder benötigten Dienstgüte geschieht.

15. Verfahren nach Patentanspruch 13,
**dadurch gekennzeichnet, dass**
die Standard-Netzelemente Funktions- und Dienstaufrufe
- Erkennen
- Klassifizieren
- Behandeln, soweit dies nicht von Kern-Netzelementen geschehen kann oder
- Weiterleiten.

## Claims

1. Method for controlling a layered network architecture (RT, PT, NT) consisting of network elements (3, 5) in a network composed of basic physical telecommunications networks (CN, MN, PSTN, internet) by means of an operating system which is subdivided into three functional layers:
- an application layer,
- a service development layer and
- a network element function (NEF) layer,
wherein said method
integrates network functions, network services and basic network services from the lower-ranking basic physical networks that are distributed via said network elements and makes them available via system-independent interfaces (1), in that the operating system components residing in the same or different network elements interwork according to the client-server principle and
the operating system components enable a network element to operate either as a client or as a server dependent on whether a network element requests or executes a network service or a network function.

2. Method according to claim 1,
**characterised in that**
the network composed of physical data and/or communication networks can be dynamically expanded by inserting further network elements or further basic physical networks.

3. Method according to one of the preceding claims,
**characterised in that**
applications can be subdivided into network function calls (Sub-function 1) or network service calls (Sub-service 2), and said network function or service calls are processed by
- a network element
- or a plurality of network elements which can be different in respect of their basic function.

4. Method according to claim 3,
**characterised in that**
- the network function (Sub-function 1, Sub-call x) and network service calls (Sub-service 2, Sub-call y) are routed to suitable network elements (3, 5, NN a)) in the network, and
- the network elements translate the calls into calls of network services (Service b, y), basic network services (Service c, z) and functions (Function a, x) corresponding to the respective basic physical networks, and
- are sent to network elements (NN b, NN c, NN d) which possess the required (basic) network services and functions, and
- are processed by said network elements.

5. Method according to one of the preceding claims,
**characterised in that**
the service development layer fulfils at least one of the following functions:
- converting applications via appropriate interfaces into network function and network service calls (Interface manager),
- forwarding the network function and service calls in a suitable manner (transport mechanism),
- managing the resources,
- billing for the services,
- processing the captured billing data for the purpose of fixing rates,
- security management,
- processing error messages,
- monitoring transactions (monitoring),
- managing information.

6. Method according to one of the preceding claims,
**characterised in that**
the service development layer functions are made available in a network element operating as a server for the following tasks:
- controlling (Control)
- executing (Execution) and
- monitoring (Monitoring)
received function and service calls.

7. Method according to one of the preceding claims,
**characterised in that**
the service development layer performs the following tasks in a network element operating as a client:
- operating an interface (Interface manager),
- providing frequently required basic services (Basic services)
- providing at least one server-specific transport mechanism,
- providing a standard transport mechanism.

8. Method according to claim 7,
**characterised in that**
operating the interface can include the following functions:
- providing system-independent interfaces of the service development layer to the application layer,
- receiving application calls and converting same into system-specific function and service calls,
- distributing the system-specific function and service calls in accordance with the information stored in the network elements and relating to the distribution of the functionalities to the processing network elements,
- dynamically updating the information relating to the distribution of the functions and services to the individual network elements and the appropriate routing information,
- establishing internal connections to the system-specific transport mechanisms.

9. Method according to claim 7 or 8,
**characterised in that**
a server-specific transport mechanism converts the function and service calls passed to it into a system-specific format corresponding to the assigned lower-ranking network elements (servers) and forwards them.

10. Method according to one of claims 7 to 9,
**characterised in that** a standard transport mechanism converts the function and service calls passed to it into a specific format corresponding to the adjacent network elements and forwards them to said network elements.

11. Method according to one of claims 7 to 10,
**characterised in that**
dynamic updating of the information contained in the network elements (clients) and relating to the services or functions available in the network is ensured by means of an updating mechanism in which
- after introduction of a new function or a new service,
- the network elements (servers) update the information of the transport mechanisms associated with them and distribute said information to the adjacent and lower-ranking network elements using said transport mechanisms, and
- further information can be updated in the network elements (clients) .

12. Method according to one of the preceding claims,
**characterised in that**
the transmission and execution of received function and service calls by suitable basic network functions and basic services is ensured by the network element function (NEF) layer.

13. Method according to one of the preceding claims,
**characterised in that**
the network is subdivided into functional network domains, consisting of core network elements and standard network elements.

14. Method according to claim 13,
**characterised in that**
application requests and function and service calls are executed by the core network elements, it being ensured that this takes place with the requested or required quality of service.

15. Method according to claim 13,
**characterised in that**
the standard network elements
- detect
- classify
- handle, in so far as this cannot be done by core network elements, or
- forward
function and service calls.

## Revendications

1. Procédé pour commander une architecture de réseau (RT, PT, NT) par couches comprenant des éléments de réseau (3, 5) dans un réseau constitué de réseaux de base de télécommunication physiques (CN, MN, PSTN, Internet), par un système d'exploitation, qui est subdivisé en trois couches fonctionnelles :
- une couche d'application,
- une couche de développement et de mise à disposition de service,
- une couche de fonction d'élément de réseau (NEF)
le procédé intégrant par ces éléments de réseau des fonctions de réseau réparties, des services de réseau et de base de réseau à partir des réseaux de base physiques sous-jacents et les mettant à disposition au moyen d'interfaces (1) indépendantes du système, par le fait que les composants du système d'exploitation résidant dans des éléments de réseau identiques ou différents travaillent les uns avec les autres selon le principe Client-Serveur, et
les composants du système d'exploitation rendent un élément de réseau apte à travailler aussi bien comme client que comme serveur, en fonction du fait qu'un élément de réseau demande un service de réseau ou une fonction de réseau ou l'exécute.

2. Procédé selon la revendication 1,
**caractérisé en ce que**
une extension du réseau à partir de réseaux de données et/ou de réseaux de communication physiques par l'insertion d'autres éléments de réseau ou d'autres réseaux de base physiques est dynamiquement possible.

3. Procédé selon l'une quelconque des revendications précédentes,
**caractérisé en ce que**
des utilisations (applications) peuvent être décomposées en appels de fonction de réseau (fonction partielle 1) ou appels de service de réseau (service partiel 2),
et ces appels de fonction de réseau ou de service de réseau sont traités par
- un élément de réseau,
- ou par plusieurs éléments de réseau qui peuvent être différents en ce qui concerne leur fonction de base.

4. Procédé selon la revendication 3,
**caractérisé en ce que**
- les appels de fonction de réseau (fonction partielle 1, partie x) et les appels de service de réseau (service partiel 2, partie y) sont acheminés vers des éléments de réseau appropriés (3, 5, NNa) dans le réseau, et
- les éléments de réseau convertissent les appels en appels correspondant aux réseaux de base physiques respectifs de services de réseau (service b, y), services de base de réseau (service c, z) et de fonctions de base de réseau (fonction a, x), et
- sont envoyés à des éléments de réseau (NNb, NNc, NNd) qui présentent les services (de base) de réseau et fonctions de base de réseau nécessaires et
- sont traités par ceux-ci.

5. Procédé selon l'une quelconque des revendications précédentes,
**caractérisé en ce que**
la couche de développement et de mise à disposition de service répond au moins à l'une des fonctions suivantes :
- conversion d'applications au moyen d'interfaces appropriées en appels de fonction de réseau et de service de réseau (gestionnaire d'interfaces)
- transmission des appels de fonction de réseau et de service de réseau de façon appropriée (mécanisme de transport),
- gestion des ressources,
- taxation des services,
- traitement des données de taxation élevées pour la tarification,
- gestion de sécurité,
- traitement de messages d'erreur,
- surveillance de transactions (contrôle),
- gestion d'informations.

6. Procédé selon l'une quelconque des revendications précédentes
**caractérisé en ce que**,
dans un élément de réseau travaillant comme serveur, la couche de développement et de mise à disposition de service met à disposition des fonctions pour les tâches suivantes :
- commande (commande)
- exécution (exécution) et
- contrôle (contrôle)
d'appels de fonction et de service reçus.

7. Procédé selon l'une quelconque des revendications précédentes,
**caractérisé en ce que**,
dans un élément de réseau travaillant comme client, la couche de développement et de mise à disposition de service exécute les tâches suivantes :
- exploitation d'une interface (gestionnaire d'interfaces),
- offre de services de base souvent utilisés (services de base),
- offre d'au moins un mécanisme de transport spécifique au serveur,
- offre d'un mécanisme de transport standard.

8. Procédé selon la revendication 7,
**caractérisé en ce que**
l'exploitation de l'interface peut comprendre les fonctions suivantes :
- mise à disposition d'interfaces indépendantes du système de développement et de mise à disposition de service pour la couche d'application,
- réception d'appels d'application et conversion en appels de fonction et de service spécifiques au système,
- répartition des appels de fonction et de service spécifiques au système en fonction de l'information stockée dans les éléments de réseau sur la répartition des fonctionnalités entre les éléments de réseau,
- actualisation dynamique de l'information sur la répartition des fonctions et services entre les éléments de réseau individuels et les informations de choix de voie appropriées,
- établissement de liaisons internes avec les mécanismes de transport spécifiques au système.

9. Procédé selon la revendication 7 ou 8,
**caractérisé en ce que**
un mécanisme de transport spécifique au serveur convertit les appels de fonction et de service qui lui ont été remis en un format spécifique au système en fonction des éléments de réseau (serveurs) subordonnés attribués et les transmet.

10. Procédé selon l'une quelconque des revendications 7 à 9,
**caractérisé en ce que**
un mécanisme de transport standard convertit les appels de fonction et de service qui lui ont été remis en un format spécifique en fonction des éléments de réseau voisins et les transmet à ceux-ci.

11. Procédé selon l'une quelconque des revendications 7 à 10,
**caractérisé en ce que**
une actualisation dynamique des informations contenues dans les éléments de réseau (Clients) sur les services ou fonctions disponibles dans le réseau est garantie, par un mécanisme d'actualisation, sur lequel,
- l'introduction d'une nouvelle fonction ou d'un nouveau service
- les éléments de réseau (Serveur) actualisent les informations, qui leur sont spécifiques, des mécanismes de transport et les répartissent entre les éléments de réseau utilisant les mécanismes de transport, voisins et subordonnés et
- d'autres informations peuvent être actualisées dans les éléments de réseau (Clients).

12. Procédé selon l'une quelconque des revendications précédentes,
**caractérisé en ce que**
la transmission et l'exécution d'appels de fonction et de service reçus sont garanties par des fonctions de base de réseau et services de base appropriés de la couche de fonction d'élément de réseau (NEF).

13. Procédé selon l'une quelconque des revendications précédentes
**caractérisé en ce que**
le réseau est réparti en domaines de réseau fonctionnels, constitués d'éléments de réseau principaux et d'éléments de réseau standard.

14. Procédé selon la revendication 13,
**caractérisé en ce que**
des exigences d'application et appels de fonction et de service sont exécutées par les éléments de réseau principaux, sachant qu'il est garanti que ceci s'effectue avec la qualité de service demandée ou utilisée.

15. Procédé selon la revendication 13,
**caractérisé en ce que**
les réseaux standard
- reconnaissent
- classifient
- traitent des appels de fonction et de service dans la mesure où ceci ne peut pas se faire par des éléments de réseau principaux ou
- transmettent
les appels de fonction et de service.
